# EUROPEAN PATENT SPECIFICATION

(11) **EP 3 470 815 B1**
(45) Date of publication and mention of the grant of the patent: **30.06.2021**
(21) Application number: 18196755.5
(22) Date of filing: 26.09.2018
(51) Int. Cl.: G01M 99/00, G01L 5/00, G01N 19/04

(54) **DEVICE FOR MEASURING THE STRENGTH OF A PRESSED CONNECTION**
VORRICHTUNG ZUM MESSEN DER FESTIGKEIT EINER PRESSVERBINDUNG
DISPOSITIF DE MESURE DE LA RÉSISTANCE D'UN RACCORD PRESSÉ

(30) Priority: 13.10.2017 CZ 20170654
(43) Date of publication of application: 17.04.2019
(73) Proprietor: VÚTS, a.s., Liberec XI - Ruzodol I 460 01 Liberec (CZ)
(72) Inventor: Fabera, Jaroslav, 460 14 Liberec, Liberec XIV-Ruprechtice (CZ); Klepl, Robert, 463 12 Liberec, Liberec XXV-Vesec (CZ); Havlik, Jaroslav, 460 08 Liberec, Liberec VIII-Dolni Hanychov (CZ)
(74) Representative: Musil, Dobroslav

(56) References cited:
- GB-A- 2 263 553
- US-A- 4 299 131
- US-A1- 2017 261 405

## Description

### Technical field

The invention relates to a device for measuring the strength of a pressed joint of components of a part to be tested.

### Background art

Pressed joints are widely used in various industries and the strength of a joint between two mounting parts pressed together affects the final quality of the finished product and its overall service life. A poor joint, e.g. between a lid and a chamber of an electric motor, results in increased noise and vibration when the electric motor is used, which has a negative impact on its service life.

Nowadays, control of the joined mounting parts immediately after their assembly is performed only visually, whereby this control can be preceded by applying compression force to the joint. Complete assembly of a product is in some cases followed by further testing, such as vibration or noise testing. In these tests, however, a defect is found in the already finished product and not its cause, e.g. whether it was caused by the poor quality of the joint of the two mounting parts, or whether the defect arose in other operations in connection with the product assembly.

Known measuring devices are disclosed in US 2017/261405 and US 4299131.

The aim of the invention is to provide a device for measuring joint strength which tests the strength and quality of the joint between two mounting parts immediately after they have been joined together.

### Principle of the invention

The aim of the invention is achieved by the device for measuring the strength of a joint according to the present invention whose principle consists in that it comprises a base on which is fixedly mounted a seating provided with a recess for receiving a part to be tested and with at least one opening for a pressure element arranged at the point of the measured section of the part tested, wherein on the base from one side of the seating is further reversibly displaceably mounted a pressure unit provided with pressure elements and coupled to a pressure drive for the reversible displacement of the pressure unit to the seating so that the pressure element is pushed against the measured section of the part tested, whereby a fixation unit is reversibly displaceably mounted on the base from the other side of the seating, the fixation unit being coupled to a fixation drive for the reversible displacement of the fixation unit to the seating so that the part tested will be secured in the recess of the seating and the fixation unit is further provided with a measuring unit for measuring the position of the measured section of the part tested. In a preferred embodiment, a continuous guide formed by a pair of rails is mounted along the edges of the base plate, in order to ensure the best possible transmission of the applied forces of the fixation and pressure units onto the measured section of the part tested, the guide being parallel to the direction of insertion of the part tested into the recess of the seating. In other embodiments, the continuous guide may be interrupted or may be formed only by one guide rail.

Preferably, the fixation unit is mounted on the upper portion of the continuous guide located above the seating, while the pressure unit is mounted on the lower portion of the continuous guide located below the seating.

In a basic embodiment, the fixation unit and the measuring unit are moved towards the part tested individually with the aid of their own means for moving them to the seating and back. In a preferred embodiment, the measuring unit is coupled to the fixation unit, the measuring unit and the fixation unit being provided with common means for moving them to the seating and back. When the fixation unit is moved towards the part tested, the measuring unit is simultaneously moved towards the measured section of the part tested.

### Description of drawings

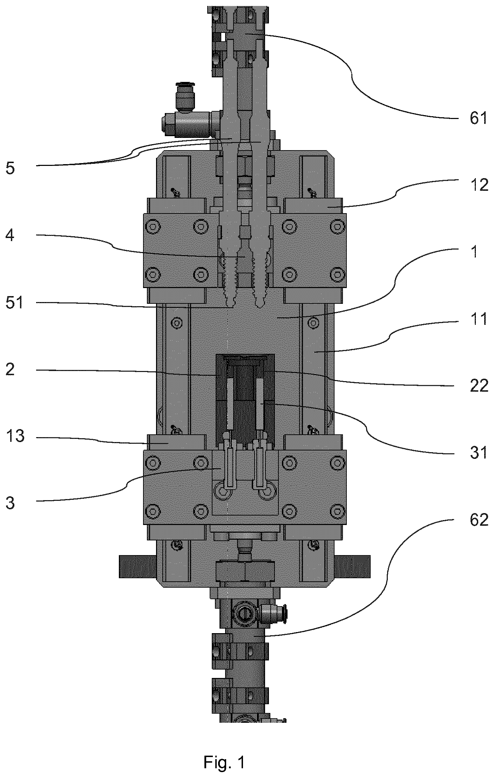

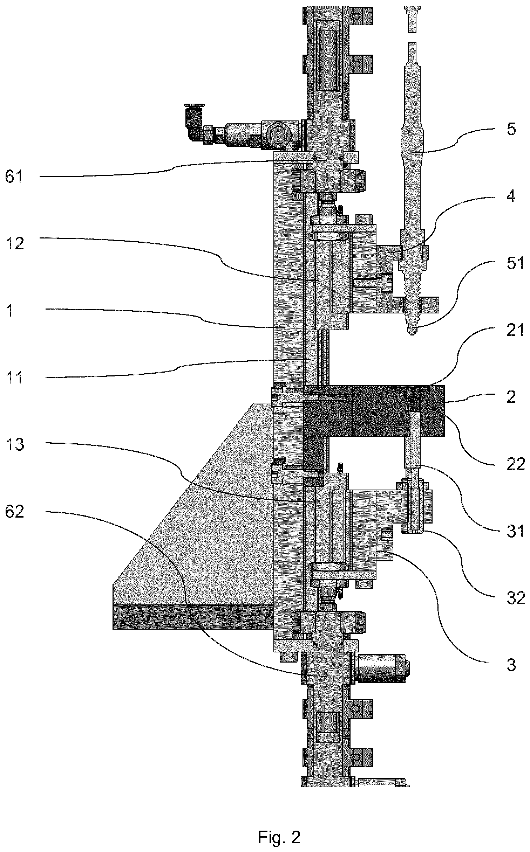

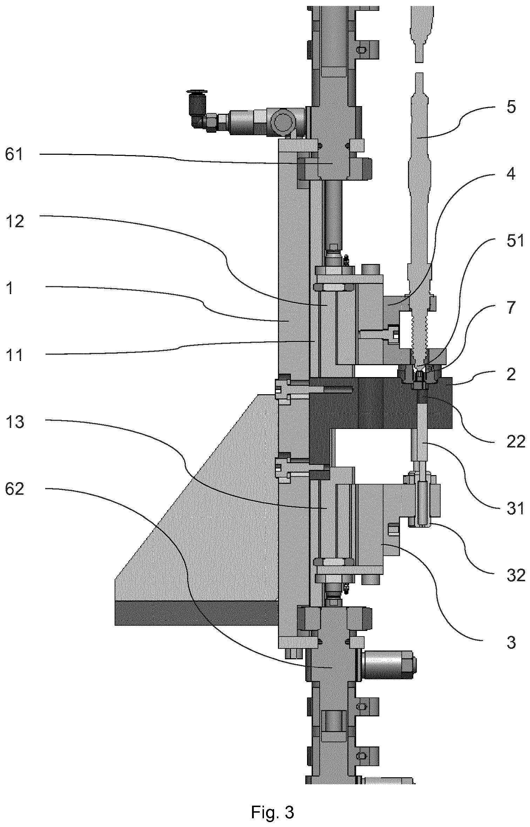

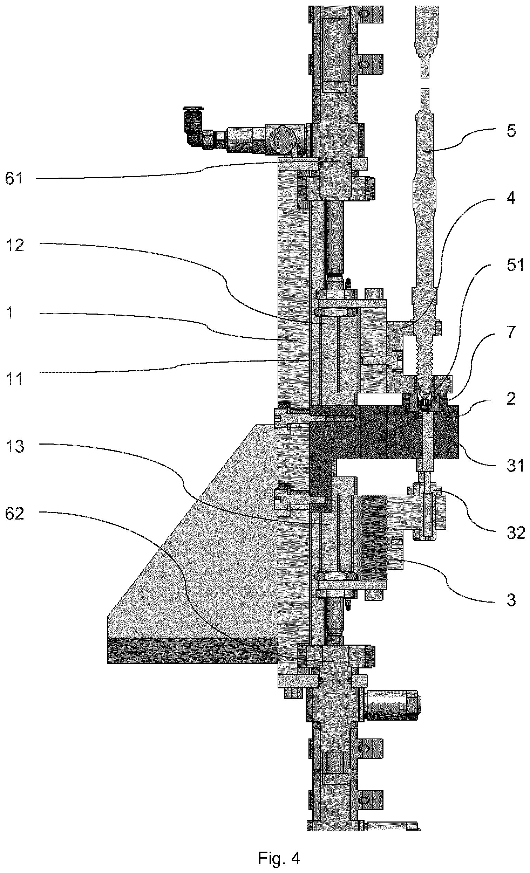

The invention is schematically represented in the drawings, wherein Fig. 1 is a front view of the device in the open state; Fig. 2 is a side view of a vertical cross-section of the device with a part tested placed in it; Fig. 3 is a side view of a vertical cross-section of a device with a fixed part tested and Fig. 4 is a side view of a vertical cross-section through a device with the part tested placed in it during the measurement.

### Examples of embodiment

The device for measuring the strength of a joint will be described in a vertical arrangement, since this arrangement allows to insert the part to be tested most conveniently, but if, by means of any of the suitable known methods, we secure the part tested after insertion into the device, the device can be arranged horizontally or at any angle.

The device comprises a base **1,** which is in this exemplary embodiment formed by a vertically oriented plate on whose front side is fixedly mounted a seating **2,** in whose upper wall a recess **21** is formed for receiving the part **7** tested. The shape of the recess **21** is adapted to the shape of the part tested. Two openings **22** are formed in the seating **2** at the point where the joint is to be measured, the two openings extending from the recess **21** to a lower wall of the seating **2.** The seating **2** is at least partially removable and replaceable with a seating **2** whose recess **21** has a shape adapted to the shape of the part tested.

Arranged in the vicinity of the edges of the base **1** are two rails constituting a continuous guide **11,** which is parallel to the axis of the recess **21** of the seating **2,** whereby the upper portion **11a** of the continuous guide **11** mounted above the seating **2** and the lower portion **11b** of the continuous guide **11** mounted below the seating **2** may be in an alternative embodiment divided or, in case of need, they may be formed only by one rail.

The pressure unit **3** is reversibly displaceably mounted on the lower portion **11b** of the continuous guide **11** and two pressure elements **31** are mounted in the front portion of the pressure unit **3**, facing the seating **2,** whereby the free ends of the pressure elements extend to the openings **22** in the seating **2 for a more precise abutting of the pressure elements 31** in case of inserting another type of a part tested into the seating **2.** The front portion of the pressure unit **3** and the pressure elements **31** are removable and replaceable. The pressure unit **3** is coupled to a pressure drive **62** to ensure the reciprocating movement to the seating **2** and back. In the embodiment shown, the pressure drive **62** is formed by a pneumatic cylinder, but it may be also formed by another known device for causing a linear reciprocating movement of the pressure unit **3.**

On the upper portion **11a** of the continuous guide **11** is reversibly displaceably mounted the fixation unit **4,** whose lower surface is designed to abut the part **7** to tested. In the embodiment shown, this surface is straight, but in an alternative embodiment, a recess can be formed in it corresponding to the shape of the upper portion of the part **7** tested. In the fixation unit **4,** opposite the openings **22** in the seating **2,** are arranged measuring units **5** which are at their ends opposite the seating **2** provided with measuring tips **51,** which extend below the lower surface of the fixation unit **4** and are coupled to a known unillustrated device for the evaluation of their position. The fixation unit **4** is coupled to a fixation drive **61** to ensure the reciprocating movement towards the seating **2** and back which is in the embodiment shown formed by a pneumatic cylinder, but it may be also formed by another known device for causing a linear reciprocating movement of the pressure **unit 3.**

The function of the device for measuring the strength of a pressed joint according to the invention will be described with reference to an exemplary embodiment, where the part **7** tested is the lid of an electric motor and the component to be measured of the part **7** tested are two chambers which are attached to the lid by bending their ends, i.e. they are pressed into it.

The operator of the device or a programmed handling arm inserts the part **7** tested into the recess **21** of the seating **2.** After starting the device, the fixation unit **4** moves along the upper guide **11a** to the upper side of the seating **2** and abuts with its lower portion the part **7** tested and in this manner fixes it in the seating **2,** whereby the measuring tips **51** of the measuring unit **5** abut the part **7** tested and the measuring device **5** reads the initial position of the part **7** tested.

Subsequently, the pressure unit **3** is brought to the bottom of the seating **2** along the lower guide **11b,** whereby the pressure elements **31** which are mounted on its front part move deeper inside the openings **22** of the seating **2** and are pressed by a predetermined force against the measured section of the part **7** tested.

After pressing the pressure elements **31** against the measured section of the part **7** tested, the measuring unit **5** reads the new position of the measured section of the part **7** tested, which is compared to the initial position of the measured section of the part **7** tested by the coupled device for evaluating the position of the measured section. If the magnitude of the displacement is greater than the maximum allowable value, then the quality of the joint of this part **7** is insufficient and the part is considered a defective product.

After comparing the measured positions, first the pressure unit **3** is moved away from the tested part **7** placed in the seating **2,** and subsequently the fixation unit **4** and the measuring unit **5** are moved back together, thereby releasing the part **7** tested from the seating **2.**

## Claims

1. A device for measuring the strength of a pressed joint of two components of a part to be tested, comprising a base (1), on which is fixedly mounted a seating (2) provided with a recess (21) for receiving the part (7) to be tested and with at least one opening (22) for a pressure element (31), the opening (22) extending from the recess (21) to a lower wall of the seating (2), whereby on the base (1) from one side of the seating (2) is reversibly displaceably mounted a pressure unit (3) provided with pressure elements (31) and coupled to a pressure drive (62) to ensure the reciprocating movement of the pressure drive (62) to the seating (2) and to push the pressure element (31) through the at least one opening (22) to one side of the part (7) to be tested, whereas a fixation unit (4) is reversibly displaceably mounted on the base (1) from the other side of the seating (2), the fixation unit being coupled to a fixation drive (61) to ensure its reversible displacement to the seating (2) and;
a measuring unit (5) to measure the position of one side of the part (7) to be tested,
**characterized in that** the fixation unit is configured to clamp the part (7) to be tested in the recess 21 of the seating.

2. The device according to claim 1, **characterized in that** a continuous guide (11) is arranged on the vicinity of the edges of the base (1) and is parallel to the direction of the insertion of the part (7) to be tested into the recess (21) of the seating (2).

3. The device according to claim 2, **characterized in that** the pressure unit (3) is reversibly displaceably mounted on the lower portion (11b) of the continuous guide (11) and the fixation unit (4) is reversibly displaceably mounted on the upper portion (11a) of the continuous guide (11).

4. The device according to claim 1 or 3, **characterized in that** the measuring unit (5) is mounted on the fixation unit (4).

## Patentansprüche

1. Einrichtung zur Festigkeitsmessung einer Pressverbindung von zwei Bestandteilen eines zu testenden Teils, die aufweist
eine Basis (1), auf der ein Anlegebett (2) fest gelagert ist, das eine Ausnehmung (21) zur Lagerung eines zu testenden Teils (7) und mindestens eine Öffnung (22) aufweist, die von der Ausnehmung an die untere Wand des Bettes (2) durchgeht, wobei auf der Basis (1) weiter von einer Seite des Anlegebetts (2) her eine Andruckeinheit (3) umkehrbar verstellbar gelagert ist, die die Andruckelemente (31) aufweist und mit einem Andruckantrieb (62) zu ihrer umkehrbaren Versetzung zum Anlegebett (2) zum Zwecke eines Andrückens eines Andruckelementes (31) durch mindestens eine Öffnung (22) auf einen zu messenden Teil eines zu testenden Teils (7) verkoppelt ist, wobei auf der Basis (1) von der anderen Seite des Anlegebetts (2) her eine Fixiereinheit (4) umkehrbar verstellbar gelagert ist, die mit einem Fixierantrieb (61) zu ihrer umkehrbaren Versetzung zum Anlegebett (2) verkoppelt ist und;
eine Messeinheit (5) zur Lagemessung einer Seite eines zu testenden Teils (7), **dadurch gekennzeichnet, dass** die Fixiereinheit so angeordnet ist, dass sie einen zu testenden Teil (7) in den Ausnehmungen (21) des Anlegebetts (2) aufnimmt.

2. Einrichtung nach dem Anspruch 1, **dadurch gekennzeichnet, dass** an den Rändern der Basis (2) mit der Richtung der Einlegung eines zu testenden Teils (7) in die Ausnehmung (21) des Anlegebetts (2) eine durchlaufende Gleitschiene (11) parallel laufend gelagert ist.

3. Einrichtung nach dem Anspruch 2, **dadurch gekennzeichnet, dass** eine Andruckeinheit (3) auf dem unteren Teil (11b) der durchlaufenden Gleitschiene (11) umkehrbar verstellbar gelagert ist und eine Fixiereinheit (4) auf dem oberen Teil (11a) der durchlaufenden Gleitschiene (11) umkehrbar verstellbar gelagert ist.

4. Einrichtung nach dem Anspruch 1 oder 3, **dadurch gekennzeichnet, dass** eine Messeinheit (5) auf einer Fixiereinheit (4) gelagert ist.

## Revendications

1. Dispositif pour mesurer la résistance d'un assemblage par pression entre deux parties d'une pièce testée, composé d'une
base (1), à laquelle est fixé un lit de chargement (2) muni d'un évidement (21) pour recevoir la pièce testée (7) et d'au moins une ouverture (22) qui s'étend de l'évidement à la paroi inférieur du lit (2), tandis que sur la base (1) est montée, d'un côté du lit de chargement (2) et de manière réversible et modulable, l'unité de pression (3) munie d'éléments de pression (31), attelée à une commande de pression (62) qui assure son déplacement « aller-retour » vers le lit de chargement (2) pour pousser l'élément de pression (31) à travers d'au moins une ouverture (22) vers la partie mesurée de la pièce testée (7), tandis que sur la base (1) est montée, de l'autre côté du lit de chargement (2) et de manière réversible et modulable, l'unité de fixation (4), attelée à une commande de fixation (61) qui assure son déplacement « aller-retour » vers le lit de chargement (2), et;
de l'unité (5) pour mesurer la position d'un côté de la pièce testée (7), **caractérisée en ce que** l'unité de fixation est disposée de manière à serrer la pièce testée (7) dans l'évidement (21) du lit de chargement (2).

2. Dispositif selon la revendication 1, **caractérisé en ce que** sur les rebords de la base (2) est monté, de manière parallèle au sens d'introduction de la pièce testée (7) dans l'évidement (21) du lit de chargement (2), un conduit continu (11).

3. Dispositif selon la revendication 2, **caractérisé en ce que** l'unité de pression (3) est montée, de manière réversible et modulable, sur la partie inférieure (11b) du conduit continu (11), et l'unité de fixation (4) est montée, de manière réversible et modulable, sur la partie supérieure (11a) du conduit continu (11).

4. Dispositif selon la revendication 1 ou 3, **caractérisé en ce que** l'unité de mesure (5) est montée sur l'unité de fixation (4).
